(19) Europäisches Patentamt
European Patent Office
Office européen des brevets

(11) **EP 4 564 633 A1**

(12) **EUROPEAN PATENT APPLICATION**
published in accordance with Art. 153(4) EPC

(43) Date of publication:
**04.06.2025 Bulletin 2025/23**

(21) Application number: **23844750.2**

(22) Date of filing: **05.01.2023**

(51) International Patent Classification (IPC):
**H02J 3/24** *(2006.01)*     **H02J 15/00** *(2006.01)*

(52) Cooperative Patent Classification (CPC):
Y02E 60/36

(86) International application number:
**PCT/CN2023/070601**

(87) International publication number:
**WO 2024/021531 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.07.2022   CN 202210877108**

(71) Applicant: **Sungrow Power Supply (Nanjing) Co.,
Ltd
Nanjing, Jiangsu 210012 (CN)**

(72) Inventors:
• **HUANG, Tian gang
Nanjing, Jiangsu 210012 (CN)**
• **XIA, Yanhui
Nanjing, Jiangsu 210012 (CN)**

(74) Representative: **Zacco Norway AS
P.O. Box 488 Skøyen
0213 Oslo (NO)**

(54) **POWER SYSTEM AND FREQUENCY MODULATION CONTROL METHOD THEREFOR**

(57)     Disclosed in the present application are a power system and a frequency modulation control method therefor. The method comprises: first, determining whether the current power grid frequency of a power system falls within a preset allowable frequency deviation range; if not, performing calculation according to the current power grid frequency and a power grid rated frequency to obtain an input current change value of a hydrogen production power generation unit in the power system; on the basis of the size relationship between the input current change value and limit values thereof and the size relationship between the changed input current value and limit values thereof, determining a target input current of the hydrogen production power generation unit; and finally, adjusting an input current of the hydrogen production power generation unit according to the target input current, so as to allow the power grid frequency of the power system to fall within the preset allowable frequency deviation range. Therefore, by means of the relationship between system power consumption and frequency fluctuation, the present application can guide input current setting for the hydrogen production power generation unit on the basis of a measured system frequency to achieve frequency modulation control of the power system, thus solving the problem of frequency fluctuation of power grid systems caused by randomness and fluctuation of renewable energy power generation.

FIG. 1

## Description

The present application claims the priority to Chinese Patent Application No. 202210877108.3 titled "POWER SYSTEM AND FREQUENCY MODULATION CONTROL METHOD THEREFOR", filed on July 25, 2022 with the China National Intellectual Property Administration, which is incorporated herein by reference in its entirety.

## FIELD

The present disclosure relates to the technical field of frequency regulation of power system, and in particular to a power system and a frequency regulation control method therefor.

## BACKGROUND

In technology for producing hydrogen by electrolyzing water, water is decomposed into hydrogen and oxygen under the action of direct current. As an energy carrier, hydrogen can realize the recycling of carbon-free energy, and efficiently utilize fluctuating renewable energy power through the "electricity-hydrogen-electricity" method. Technology for producing hydrogen by electrolyzing water is both green and efficient, and provides a new solution for energy conversion and utilization in the future of human society.

Although renewable energy power generation can reduce pollution and has a certain positive effect, it will lead to problems such as node frequency fluctuations in the power grid, due to the randomness and fluctuation of renewable energy power generation.

## SUMMARY

Based on the shortcomings of the above existing technology, a power system and a frequency regulation control method therefor are provided in the present disclosure. The input current from the hydrogen generator unit is configured based on the detected system frequency through a relationship between system power consumption and frequency fluctuation, to achieve the frequency regulation control of the power system, which solves the problem of frequency fluctuations in the power system caused by the randomness and fluctuation of renewable energy power generation.

To achieve the above objectives, the following technical solutions are provided according to the present disclosure.

In a first aspect, a frequency regulation control method for a power system is provided in the present disclosure, including:

determining whether a present grid frequency of the power system is within a preset frequency deviation range;

calculating a change value of an input current from a hydrogen generator unit in the power system, based on the present grid frequency and a rated grid frequency, in response to determining that the present grid frequency is not within the preset frequency deviation range;

determining a target input current from the hydrogen generator unit, based on a relationship between the change value of the input current from the hydrogen generator unit and a threshold of the change value of the input current and a relationship between a changed input current and a threshold of the changed input current; and

adjusting the input current from the hydrogen generator unit based on the target input current, to adjust a grid frequency of the power system to the preset frequency deviation range.

In an embodiment, in the frequency regulation control method for the power system, an upper limit of the preset frequency deviation range is $f_0 + \varepsilon_1$, and a lower limit of the preset frequency deviation range is $f_0 - \varepsilon_2$;
where $f_0$ represents the rated grid frequency, $\varepsilon_1$ represents a maximum increment, and $\varepsilon_2$ represents a maximum decrement.

In an embodiment, in the frequency regulation control method for the power system, the calculating a change value of an input current from a hydrogen generator unit in the power system, based on the present grid frequency and a rated grid frequency includes:

determining a grid frequency difference between the present grid frequency and the rated grid frequency; and calculating the change value of the input current from the hydrogen generator unit, based on the grid frequency difference and a current adjustment proportion function.

In an embodiment, in the frequency regulation control method for the power system, the current adjustment proportion function is: $\Delta I_i = K_p \Delta f_i$; where $\Delta I_i$ represents the change value of the input current, $K_p$ represents a proportional gain, and $\Delta f_i$ represents the grid frequency difference.

In an embodiment, in the frequency regulation control method for the power system, the determining a target input current from the hydrogen generator unit, based on a relationship between the change value of the input current from the hydrogen generator unit and a threshold of the change value of the input current and a relationship between a changed input current and a threshold of the changed input current includes:

determining the target input current as a sum of a present input current and the change value of the input current, in a case that the relationship between the change value of the input current and the threshold of the change value of the input current and the relationship between the changed input current and the threshold of the changed input current meet a first preset condition;

determining the target input current as a sum of the present input current and an upper limit of the change value of the input current, in a case that the relationship between the change value of the input current and the threshold of the change value of the input current and the relationship between the changed input current and the threshold of the changed input current meet a second preset condition;

determining the target input current as a sum of the present input current and a lower limit of the change value of the input current, in a case that the relationship between the change value of the input current and the threshold of the change value of the input current and the relationship between the changed input current and the threshold of the changed input current meet a third preset condition;

determining the target input current as an upper limit of the changed input current, in a case that the relationship between the change value of the input current and the threshold of the change value of the input current and the relationship between the changed input current and the threshold of the changed input current meet a fourth preset condition; and

determining the target input current as a lower limit of the changed input current, in a case that the relationship between the change value of the input current and the threshold of the change value of the input current and the relationship between the changed input current and the threshold of the changed input current meet a fifth preset condition.

In an embodiment, in the frequency regulation control method for the power system, the first preset condition is:

$$\Delta I_{\min} \leq \Delta I_i \leq \Delta I_{max} \text{ and } I_{\min} \leq I_i + \Delta I_i \leq I_{max};$$

the second preset condition is:

$$\Delta I_i > \Delta I_{max} \text{ and } I_{\min} \leq I_i + \Delta I_i \leq I_{max};$$

the third preset condition is:

$$\Delta I_i < \Delta I_{\min} \text{ and } I_{\min} \leq I_i + \Delta I_i \leq I_{max};$$

the fourth preset condition is:

$$I_i + \Delta I_i > I_{max};$$

and

the fifth preset condition is:

$$I_i + \Delta I_i < I_{\min},$$

where $\Delta I_i$ represents the change value of the input current, $\Delta I_{min}$ represents the lower limit of the change value of the input current, $\Delta I_{max}$ represents the upper limit of the change value of the input current, $I_i + \Delta I_i$ represents the changed input current, $I_{min}$ represents the lower limit of the changed input current, $I_{max}$ represents the upper limit of the changed input current, and $I_i$ represents the present input current.

In an embodiment, in the frequency regulation control method for the power system, the adjusting an input current from the hydrogen generator unit based on the target input current includes:

comparing the present input current from the hydrogen generator unit with the target input current;

increasing direct-current power consumption of an electrolyzer in the hydrogen generator unit until the input current from the hydrogen generator unit is equal to the target input current, in a case that the present input current from the hydrogen generator unit is less than the target input current; and

decreasing direct-current power consumption of the electrolyzer in the hydrogen generator unit until the input current from the hydrogen generator unit is equal to the target input current, in a case that the present input current from the hydrogen generator unit is greater than the target input current.

In an embodiment, in the frequency regulation control method for the power system, after the adjusting an input current from the hydrogen generator unit based on the target input current, the method further includes: returning to the step of determining whether the present grid frequency of the power system is within the preset frequency deviation range.

In an embodiment, in the frequency regulation control method for the power system, if it is determined that the present grid frequency is within the preset frequency deviation range, returning to the step of determining whether the present grid frequency in the power system is within the preset frequency deviation range, until it is determined that the present grid frequency is not within the preset frequency deviation range.

In a second aspect, a power system is provided in the present disclosure. The power system includes: a renewable energy power generation unit, an energy storage unit, and a controller; where the energy storage unit at least includes a hydrogen generator unit; and the controller is communicatively connected to the energy storage unit, to perform the frequency regulation control method for the power system according to any one of embodiments in the first aspect by sampling the present grid frequency in the power system in real time.

A frequency regulation control method for a power system is provided in the present disclosure. The method includes: determining whether a present grid frequency of a power system is within a preset frequency deviation range; calculating a change value of an input current from a hydrogen generator unit in the power system, based on the present grid frequency and a rated grid frequency, in response to determining that the present grid frequency is not within the preset frequency deviation range; determining a target input current from the hydrogen generator unit, based on a relationship between the change value of the input current from the hydrogen generator unit and a threshold of the change value of the input current and a relationship between a changed input current and a threshold of the changed input current; and adjusting an input current from the hydrogen generator unit based on the target input current, to adjust a grid frequency of the power system to the preset frequency deviation range. Therefore, in the present disclosure, the frequency regulation control of the power system is achieved by configuring input current from the hydrogen generator unit based on the detected system frequency through the relationship between system power consumption and frequency fluctuation. The hydrogen generator unit greatly plays the role of frequency regulation for the power system in the production hydrogen process, which solves the problem of frequency fluctuations in the power system caused by the randomness and fluctuation of renewable energy power generation.

**BRIEF DESCRIPTION OF THE DRAWINGS**

In order to describe the technical solutions in the embodiments of the present disclosure or in the conventional technology more clearly, the drawings for describing the embodiments or the conventional technology are briefly introduced hereinafter. Apparently, the drawings in the following description show merely the embodiments of the present disclosure, and those skilled in the art can obtain other drawings based on these drawings without creative efforts.

FIG. 1 is a flowchart showing a frequency regulation control method for a power system according to an embodiment of the present disclosure;

FIG. 2 is a flowchart showing a process for calculating a change value of an input current from a hydrogen generator unit;

FIG. 3 is a flowchart showing an process for adjusting an input current from a hydrogen generator unit;

FIG. 4 and FIG. 5 are flowcharts showing two frequency regulation control methods for a power system according to embodiments of the present disclosure.

## DETAILED DESCRIPTION

The solutions in the embodiments of the present disclosure will be described clearly and completely hereinafter in conjunction with the accompanying drawings in the embodiments of the present disclosure. It is apparent that the described embodiments are only a part of the embodiments of the present disclosure and not all of the embodiments. Based on the embodiments of the present disclosure, all other embodiments obtained by those skilled in the art without any creative work fall into the protection scope of the present disclosure.

A frequency regulation control method for a power system is provided in the present disclosure. In the present disclosure, the frequency regulation control of the power system is achieved by configuring input current from the hydrogen generator unit based on the detected system frequency through the relationship between system power consumption and frequency fluctuation. The hydrogen generator unit greatly plays the role of frequency regulation for the power system in the production process, which solves the problem of frequency fluctuations in the power system caused by the randomness and fluctuation of renewable energy power generation.

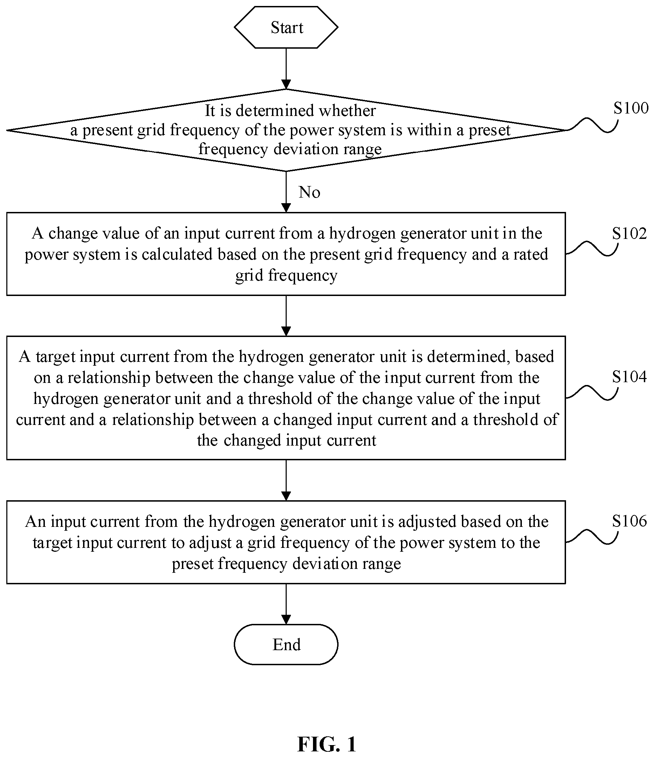

As shown in FIG. 1, a frequency regulation control method for a power system includes following steps S100 to S106.

In step S100, it is determined whether a present grid frequency of the power system is within a preset frequency deviation range.

The present grid frequency of the power system can be obtained by monitoring the grid frequency of the power system.

In practical applications, the preset frequency deviation range is generally a frequency deviation range at the grid side. The upper limit of the preset frequency deviation range may be $f_0 + \varepsilon_1$, and the lower limit of the preset frequency deviation range may be $f_0 - \varepsilon_2$. $f_0$ represents the rated grid frequency, $\varepsilon_1$ represents a maximum increment, and $\varepsilon_2$ represents a maximum decrement.

It should be noted that the maximum increment $\varepsilon_1$ and the maximum decrement $\varepsilon_2$ may be preset, may be determined based on the specific application environment and user requirement or based on the installed capacity of the power grid. The values of $\varepsilon_1$ and $\varepsilon_2$ may be equal or different, which are not specifically limited in the present disclosure, and all fall within the protection scope of the present disclosure.

If it is determined that the present grid frequency is within the preset frequency deviation range, it means that the present grid frequency of the power system is within a reasonable range and no frequency regulation is required. If it is determined that the present grid frequency is not within the preset frequency deviation range, it means that the present grid frequency of the power system is not within the reasonable range, and step S102 needs to be performed.

In step S102, a change value of an input current from a hydrogen generator unit in the power system is calculated based on the present grid frequency and a rated grid frequency.

The rated grid frequency is the rated frequency of the power grid in the power system, which is generally 50Hz or 60Hz.

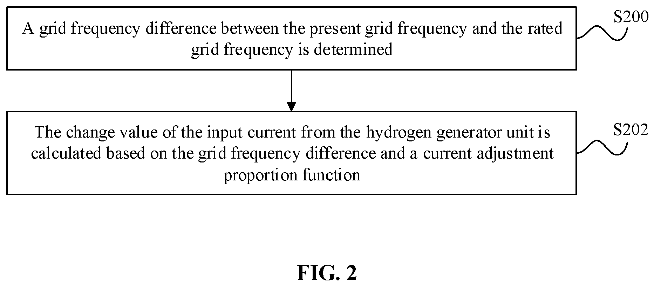

In practical applications, the step S102 of calculating a change value of an input current from a hydrogen generator unit in the power system based on the present grid frequency and a rated grid frequency mainly includes the following steps S200 and S202, as shown in FIG. 2.

In step S200, a grid frequency difference between the present grid frequency and the rated grid frequency is determined.

In some embodiments, calculation can be performed through the formula $\Delta f_i = f_i - f_0$, to determine the grid frequency difference between the present grid frequency and the rated grid frequency. In formula, $\Delta f_i$ represents the grid frequency difference, $f_i$ represents the present grid frequency and $f_0$ represents the rated grid frequency.

In practical applications, the grid frequency difference between the present grid frequency and the rated grid frequency can also be determined through other existing methods, which are not specifically limited in the present disclosure and all fall within the protection scope of the present disclosure.

In step S202, the change value of the input current from the hydrogen generator unit is calculated based on the grid frequency difference and a current adjustment proportion function.

In some embodiments, the grid frequency difference can be substituted into the current adjustment proportion function to calculate the change value of the input current from the hydrogen generator unit. The current adjustment proportion function may be $\Delta I_i = K_p \Delta f_i$, $\Delta I_i$ represents the change value of the input current, $K_p$ represents a proportional

gain, and $\Delta f_i$ represents the grid frequency difference.

Specifically, an optimal proportional gain $K_p$ can be obtained through offline trials. Alternatively, the optimal proportional gain $K_p$ can be determined through other existing methods or based on the specific application environment and user requirement, which are not specifically limited in the present disclosure and all fall within the protection scope of the present disclosure.

In step S104, a target input current from the hydrogen generator unit is determined, based on a relationship between the change value of the input current from the hydrogen generator unit and a threshold of the change value of the input current and a relationship between a changed input current and a threshold of the changed input current.

In practical applications, five cases exist generally in a process of determining the target input current from the hydrogen generator unit based on the relationship between the change value of the input current from the hydrogen generator unit and the threshold of the change value of the input current and the relationship between the changed input current and the threshold of the changed input current.

In the case 1, the target input current is determined as a sum of a present input current and the change value of the input current, in a case that the relationship between the change value of the input current from the hydrogen generator unit and the threshold of the change value of the input current and the relationship between the changed input current and the threshold of the changed input current meet a first preset condition.

In the case 2, the target input current is determined as a sum of the present input current and an upper limit of the change value of the input current, in a case that the relationship between the change value of the input current from the hydrogen generator unit and the threshold of the change value of the input current and the relationship between the changed input current and the threshold of the changed input current meet a second preset condition.

In the case 3, the target input current is determined as a sum of the present input current and a lower limit of the change value of the input current, in a case that the relationship between the change value of the input current from the hydrogen generator unit and the threshold of the change value of the input current and the relationship between the changed input current and the threshold of the changed input current meet a third preset condition.

In the case 4, the target input current is determined as an upper limit of the changed input current, in a case that the relationship between the change value of the input current from the hydrogen generator unit and the threshold of the change value of the input current and the relationship between the changed input current and the threshold of the changed input current meet a fourth preset condition.

In the case 5, the target input current is determined as a lower limit of the changed input current, in a case that the relationship between the change value of the input current from the hydrogen generator unit and the threshold of the change value of the input current and the relationship between the changed input current and the threshold of the changed input current meet a fifth preset condition.

In some embodiments, the first preset condition may be: $\Delta I_{min} \leq \Delta I_i \leq \Delta I_{max}$ and $I_{min} \leq I_i + \Delta I_i \leq I_{max}$; the second preset condition may be: $\Delta I_i > \Delta I_{max}$ and $I_{min} \leq I_i + \Delta I_i \leq I_{max}$; the third preset condition may be: $\Delta I_i < \Delta I_{min}$ and $I_{min} \leq I_i + \Delta I_i \leq I_{max}$; the fourth preset condition may be: $I_i + \Delta I_i > I_{max}$; and the fifth preset condition may be: $I_i + \Delta I_i < I_{min}$.

In the above formula, $\Delta I_i$ represents the change value of the input current, $\Delta I_{min}$ represents the lower limit of the change value of the input current, $\Delta I_{max}$ represents the upper limit of the change value of the input current, $I_i + \Delta I_i$ represents the changed input current, $I_{min}$ represents the lower limit of the changed input current, $I_{max}$ represents the upper limit of the changed input current, and $I_i$ represents the present input current.

Based on the above embodiment, it is assumed that the target input current from the hydrogen generator unit is $I_{i+1}$. The target input current from the hydrogen generator unit based on the relationship between the change value of the input current from the hydrogen generator unit and the threshold of the change value of the input current and the relationship between the changed input current and the threshold of the changed input current may be determined by the following expression:

$$I_{i+1} = \begin{cases} I_i + \Delta I_i, & \Delta I_{min} \leq \Delta I_i \leq \Delta I_{max} \text{ and } I_{min} \leq I_i + \Delta I_i \leq I_{max} \\ I_i + \Delta I_{max}, & \Delta I_i > \Delta I_{max} \text{ and } I_{min} \leq I_i + \Delta I_i \leq I_{max} \\ I_i + \Delta I_{min}, & \Delta I_i < \Delta I_{min} \text{ and } I_{min} \leq I_i + \Delta I_i \leq I_{max} \\ I_{max}, & I_i + \Delta I_i > I_{max} \\ I_{min}, & I_i + \Delta I_i < I_{min} \end{cases}$$

In step S106, an input current from the hydrogen generator unit is adjusted based on the target input current to adjust a grid frequency of the power system to the preset frequency deviation range.

In practical applications, the step S106 of adjusting an input current from the hydrogen generator unit based on the target input current includes the following steps S300 to S304.

In step S300, the present input current from the hydrogen generator unit is compared with the target input current.

If the present input current from the hydrogen generator unit is less than the target input current, step S302 is performed; and if the present input current from the hydrogen generator unit is greater than the target input current, step S304 is performed.

In step S302, direct-current power consumption of an electrolyzer in the hydrogen generator unit is increased until the input current from the hydrogen generator unit is equal to the target input current.

In practical applications, since the electric energy consumption affects the fluctuation of the system frequency and the frequency will decrease due to the large electric energy consumption, the direct-current power consumption of the electrolyzer in the hydrogen generator unit may be increased until the input current from the hydrogen generator unit is equal to the target input current, in the case that the present input current through the hydrogen generator unit is less than the target input current. In this way, the grid frequency of the power system is reduced such that the grid frequency of the power system falls within the preset frequency deviation range.

In other words, when the grid frequency is greater than the rated frequency, the input current from the hydrogen generator unit is increased and the direct-current power consumption is increased.

It should be noted that the direct-current power consumption of the electrolyzer in the hydrogen generator unit can be increased by increasing the voltage, power and hydrogen yield of the electrolyzer in the hydrogen generator unit. However, other existing methods can also be used to increase the direct-current power consumption of the electrolyzer in the hydrogen generator unit, which are not limited in the present disclosure and all fall within the protection scope of the present disclosure.

In step S304, direct-current power consumption of the electrolyzer in the hydrogen generator unit is decreased until the input current from the hydrogen generator unit is equal to the target input current.

In practical applications, since the electric energy consumption affects the fluctuation of the system frequency and the frequency will increase due to the low electric energy consumption, the direct-current power consumption of the electrolyzer in the hydrogen generator unit may be decreased until the input current from the hydrogen generator unit is equal to the target input current, in the case that the present input current from the hydrogen generator unit is greater than the target input current. In this way, the grid frequency of the power system is increased, such that the grid frequency of the power system falls within the preset frequency deviation range.

In other words, when the grid frequency is less than the rated frequency, the input current from the hydrogen generator unit is decreased and the direct-current power consumption is decreased.

It should be noted that the direct-current power consumption of the electrolyzer in the hydrogen generator unit can be decreased by decreasing the voltage, power and hydrogen production of the electrolyzer in the hydrogen generator unit. However, other existing methods can also be used to decrease the direct-current power consumption of the electrolyzer in the hydrogen generator unit, which are not limited in the present disclosure and all fall within the protection scope of the present disclosure.

It should be noted that in some embodiments, besides the frequency at a certain time, the present grid frequency of the power system may an average grid frequency at a certain period, which is determined based on the specific application environment and user requirement and all fall within the protection scope of the present disclosure.

Based on the above principles, in the present disclosure, the input current from the hydrogen generator unit can be continuously adjusted based on the monitored frequency value outside the preset frequency deviation range to change the direct-current power consumption of the hydrogen generator unit, thereby achieving frequency regulation control of the power system.

A frequency regulation control method for a power system is provided in the present disclosure. The method includes: determining whether a present grid frequency of a power system is within a preset frequency deviation range; calculating a change value of an input current from a hydrogen generator unit of the power system, based on the present grid frequency and a rated grid frequency, in response to determining that the present grid frequency is not within the preset frequency deviation range; determining a target input current from the hydrogen generator unit, based on a relationship between the change value of the input current from the hydrogen generator unit and a threshold of the change value of the input current and a relationship between a changed input current and a threshold of the changed input current; and adjusting an input current from the hydrogen generator unit based on the target input current, to adjust a grid frequency of the power system to the preset frequency deviation range. Therefore, in the present disclosure, the frequency regulation control of the power system is achieved by configuring input current from the hydrogen generator unit based on the detected system frequency through the relationship between system power consumption and frequency fluctuation. The hydrogen generator unit greatly plays the role of frequency regulation for the power system in the production hydrogen process, which solves the problem of frequency fluctuation in the power system caused by the randomness and fluctuation of renewable energy power generation, and fills the research gap in the field of frequency regulation in the power system with the assistance of hydrogen production by electrolyzing water.

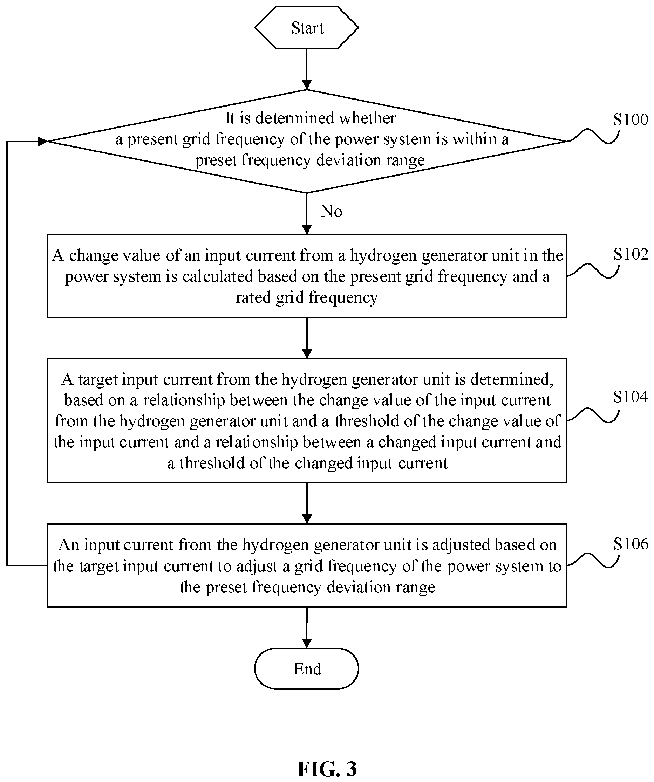

In another embodiment provided by the present disclosure, as shown in FIG. 3, after step S106 of adjusting an input current from the hydrogen generator unit based on the target input current, the frequency regulation control method for the power system further includes: returning to the step of determining whether the present grid frequency of the power system is within the preset frequency deviation range. That is, the method returns to perform step S100.

In practical applications, after adjusting the input current from the hydrogen generator unit based on the target input current, the method returns to perform step S100 to ensure that the adjusted grid frequency of the power system accurately falls within the preset frequency deviation range. It can be determined that whether the present grid frequency of the power system falls within the preset frequency deviation range. If the present grid frequency of the power system is not within the preset frequency deviation range after adjusting the input current from the hydrogen generator unit based on the target input current, the adjustment is performed again based on the adjusted grid frequency to further ensure that the adjusted grid frequency falls within the preset frequency deviation range.

In some embodiments, a frequency regulation period can be set. The above frequency regulation control method for the power system is executed in the set frequency regulation period. The frequency regulation period may be determined based on the specific application environment and user requirement, which are not limited in the present disclosure and all fall within the protection scope of the present disclosure.

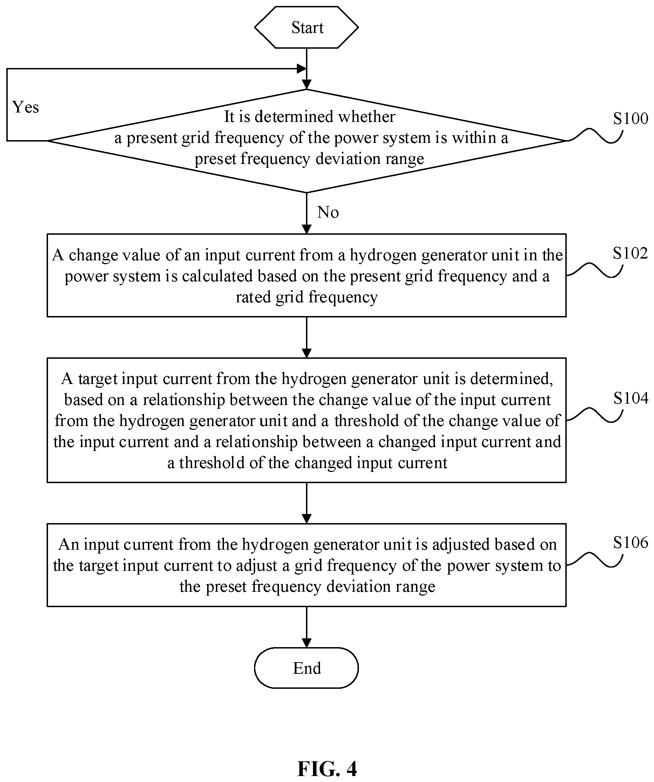

In another embodiment, as shown in FIG. 4, after step S100 of determining whether the present grid frequency of the power system is within the preset frequency deviation range, the frequency regulation control method for the power system further includes: in response to determining that the present grid frequency of the power system is within the preset frequency deviation range, returning to the step of determining whether the present grid frequency of the power system is within the preset frequency deviation range. That is, step S100 is returned to be performed.

In practical applications, if it is determined that the present grid frequency is within the preset frequency deviation range, it means that the present grid frequency of the power system is within a reasonable range, no adjustment is needed, and the next judgment can be executed. Thus, the subsequent steps of the frequency regulation control method for the power system can be executed when it is determined that the present grid frequency is not within the preset frequency deviation range, thereby realizing frequency regulation of the power system.

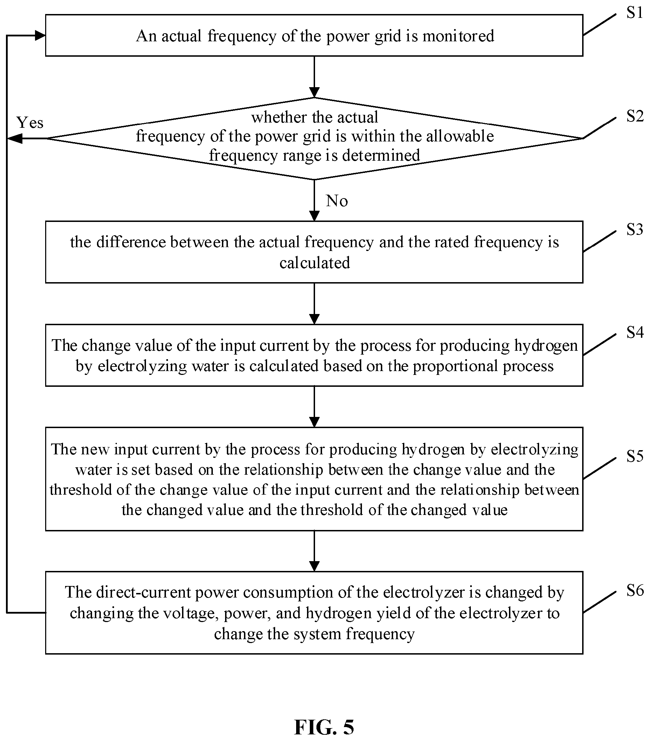

Based on the frequency regulation control method for the power system shown in the above embodiment, as shown in FIG. 5, it is assumed that the hydrogen generator unit is the apparatus for producing hydrogen by electrolyzing water in the power system. The frequency regulation control method for the power system may include the following steps S1 to S6.

In step S1, an actual frequency $f_i$ of the power grid at time $i$ is monitored, for a network containing the process of hydrogen production by electrolyzing water.

In step S2, it is determined whether the actual frequency $f_i$ of the power grid is within the frequency range. If the actual frequency $f_i$ of the power grid is not within the allowable frequency range, step 3 is performed; and if the actual frequency $f_i$ of the power grid is within the frequency range, $i = i + 1$ and step S1 is performed.

Whether the actual frequency $f_i$ of the power grid in the i-th period is within the allowable frequency range is determined by the mathematical expression $f_0 - \varepsilon_2 \leq f_i \leq f_0 + \varepsilon_1$, where $f_0$ is the rated frequency, $\varepsilon_1$ is a maximum increment, and $\varepsilon_2$ is a maximum decrement.

In step S3, a difference between the actual frequency and a rated frequency in the i-th period is calculated.

The difference between the actual frequency and the rated frequency is calculated by the mathematical expression $\Delta f_i = f_i - f_0$, where $\Delta f_i$ represents the difference between the actual frequency and the rated frequency $f_0$ in the i-th period.

In step S4, the change value $\Delta I_i$ of the input current by the process for producing hydrogen by electrolyzing water in the i-th period is calculated based on the proportional process.

The change value $\Delta I_i$ of the input current by the process for producing hydrogen by electrolyzing water in the i-th period based on the proportional process is calculated by the mathematical expression $\Delta I_i = K_p \Delta f_i$, where $K_p$ is a proportional gain. The optimal solution of the proportional gain can be obtained based on offline trials.

In step S5, a new input current $I_{i+1}$ by process for producing hydrogen by electrolyzing water in an i+1-th period is set, based on the relationship between the change value $\Delta I_i$ and a threshold $\Delta I_{max}$ and $\Delta I_{min}$ of the change value of the input current, and the relationship between the changed value $I_i + \Delta I_i$ and the threshold $I_{max}$ and $I_{min}$ of the changed value.

The new input current $I_{i+1}$ by the process for producing hydrogen by electrolyzing water in an $i^{th+1}$ period is set by the mathematical expression:

$$I_{i+1} = \begin{cases} I_i + \Delta I_i, & \Delta I_{min} \leq \Delta I_i \leq \Delta I_{max} \text{ and } I_{min} \leq I_i + \Delta I_i \leq I_{max} \\ I_i + \Delta I_{max}, & \Delta I_i > \Delta I_{max} \text{ and } I_{min} \leq I_i + \Delta I_i \leq I_{max} \\ I_i + \Delta I_{min}, & \Delta I_i < \Delta I_{min} \text{ and } I_{min} \leq I_i + \Delta I_i \leq I_{max} \\ I_{max}, & I_i + \Delta I_i > I_{max} \\ I_{min}, & I_i + \Delta I_i < I_{min} \end{cases}$$

In step S6, the direct-current power consumption of the electrolyzer is changed by changing the voltage, power, and hydrogen yield of the electrolyzer to change the system frequency, and i=i+1 and the method performs step S1.

It should be noted that the actual frequency of the power grid in the above example is equivalent to the present grid frequency of the power system in the above embodiment. The frequency allowable range is equivalent to the preset frequency deviation range in the above embodiment. The rated frequency is equivalent to the rated grid frequency in the above embodiment. The proportional process is equivalent to the current adjustment proportion function. The change value of the input current by the process for producing hydrogen by electrolyzing water is equivalent to the change value of the input current from the hydrogen generator unit in the above embodiment. The changed value is equivalent to changed input current in the above embodiment.

It should also be noted that the above example is only a specific application example provided by the present disclosure, but the application examples in actual applications are not limited to the above, and can also be modified based on the application environment and user needs, as long as the implementation method is consistent with the principles and ideas provided by the present disclosure, and all of them fall within the protection scope of the present disclosure.

Based on the frequency regulation control method for the power system provided in the above embodiments, a power system is further provided in an embodiment of the present disclosure. The power system includes: a renewable energy power generation unit, an energy storage unit and a controller; where the energy storage unit at least includes a hydrogen generator unit.

The controller is communicatively connected to the energy storage unit, to perform the frequency regulation control method for the power system according to any one of the above embodiments by sampling the present grid frequency in the power system in real time.

In practical applications, in addition to the hydrogen generator unit, the energy storage unit may further include other existing energy storage equipment, which may be determined based on the specific application environment and user requirement and fall within the protection scope of the present disclosure.

In some embodiments, the controller may be an upper computer in the power system, or may be other equipment with control functions. The specific type of the controller is not limited in the present disclosure, and all types of controllers fall within the protection scope of the present disclosure.

It should be noted that relevant details of the power system can refer to the existing technology, which will not be described in detail herein.

It should also be noted that relevant descriptions of the frequency regulation control method for the power system may refer to the corresponding embodiments in FIGs. 1 to 5, which will not be described again here.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may use different methods to implement the described functions for each specific application, but such implementation should not be regarded as exceeding the scope of the present disclosure.

The relationship terminologies such as "first" and "second" herein are only used to distinguish one entity or operation from another, rather than to necessitate or imply that the actual relationship or order exists between the entities or operations. Moreover, the terms "comprises", "includes", or any other variation are intended to cover a non-exclusive inclusion such that a process, method, article, or apparatus comprising a set of elements includes not only those elements but also other elements not expressly listed, and may also include elements inherent to such a process, method, article, or apparatus. Unless expressively limited, the statement "including a..." does not exclude the case that other similar elements may exist in the process, method, article or device including the series of elements.

According to the embodiments disclosed described above, those skilled in the art can implement or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

**Claims**

1. A frequency regulation control method for a power system, comprising:

   determining whether a present grid frequency of the power system is within a preset frequency deviation range;
   calculating a change value of an input current from a hydrogen generator unit in the power system based on the present grid frequency and a rated grid frequency, in response to determining that the present grid frequency is not within the preset frequency deviation range;
   determining a target input current from the hydrogen generator unit, based on a relationship between the change value of the input current from the hydrogen generator unit and a threshold of the change value of the input current and a relationship between a changed input current and a threshold of the changed input current; and
   adjusting the input current from the hydrogen generator unit based on the target input current, to adjust a grid frequency of the power system to the preset frequency deviation range.

2. The frequency regulation control method for the power system according to claim 1, wherein an upper limit of the preset frequency deviation range is $f_0 + \varepsilon_1$, and a lower limit of the preset frequency deviation range is $f_0 - \varepsilon_2$, wherein, $f_0$ represents the rated grid frequency, $\varepsilon_1$ represents a maximum increment, and $\varepsilon_2$ represents a maximum decrement.

3. The frequency regulation control method for the power system according to claim 1, wherein the calculating the change value of the input current from the hydrogen generator unit in the power system based on the present grid frequency and the rated grid frequency comprises:

   determining a grid frequency difference between the present grid frequency and the rated grid frequency; and
   calculating the change value of the input current from the hydrogen generator unit, based on the grid frequency difference and a current adjustment proportion function.

4. The frequency regulation control method for the power system according to claim 3, wherein the current adjustment proportion function is: $\Delta I_i = K_p \Delta f_i$; wherein $\Delta I_i$ represents the change value of the input current, $K_p$ represents a proportional gain, and $\Delta f_i$ represents the grid frequency difference.

5. The frequency regulation control method for the power system according to claim 1, wherein the determining the target input current from the hydrogen generator unit, based on the relationship between the change value of the input current from the hydrogen generator unit and the threshold of the change value of the input current and the relationship between the changed input current and the threshold of the changed input current comprises:

   determining the target input current as a sum of a present input current and the change value of the input current, in a case that the relationship between the change value of the input current and the threshold of the change value of the input current and the relationship between the changed input current and the threshold of the changed input current meet a first preset condition;
   determining the target input current as a sum of the present input current and an upper limit of the change value of the input current, in a case that the relationship between the change value of the input current and the threshold of the change value of the input current and the relationship between the changed input current and the threshold of the changed input current meet a second preset condition;
   determining the target input current as a sum of the present input current and a lower limit of the change value of the input current, in a case that the relationship between the change value of the input current and the threshold of the change value of the input current and the relationship between the changed input current and the threshold of the changed input current meet a third preset condition;
   determining the target input current as an upper limit of the changed input current, in a case that the relationship between the change value of the input current and the threshold of the change value of the input current and the relationship between the changed input current and the threshold of the changed input current meet a fourth preset condition; and
   determining the target input current as a lower limit of the changed input current, in a case that the relationship between the change value of the input current and the threshold of the change value of the input current and the relationship between the changed input current and the threshold of the changed input current meet a fifth preset condition;

6. The frequency regulation control method for the power system according to claim 5, wherein

   the first preset condition is:

$$\Delta I_{\min} \leq \Delta I_i \leq \Delta I_{max} \text{ and } I_{\min} \leq I_i + \Delta I_i \leq I_{max};$$

   the second preset condition is:

$$\Delta I_i > \Delta I_{max} \text{ and } I_{\min} \leq I_i + \Delta I_i \leq I_{max};$$

   the third preset condition is:

$$\Delta I_i < \Delta I_{\min} \text{ and } I_{\min} \leq I_i + \Delta I_i \leq I_{max};$$

   the fourth preset condition is:

$$I_i + \Delta I_i > I_{max};$$

   and
   the fifth preset condition is:

$$I_i + \Delta I_i < I_{\min},$$

   wherein $\Delta I_i$ represents the change value of the input current, $\Delta I_{\min}$ represents the lower limit of the change value of the input current, $\Delta I_{max}$ represents the upper limit of the change value of the input current, $I_i + \Delta I_i$ represents the changed input current, $I_{\min}$ represents the lower limit of the changed input current, $I_{max}$ represents the upper limit of the changed input current, and $I_i$ represents the present input current.

7. The frequency regulation control method for the power system according to claim 1, wherein the adjusting the input current from the hydrogen generator unit based on the target input current comprises:

   comparing the present input current from the hydrogen generator unit with the target input current;
   increasing direct-current power consumption of an electrolyzer in the hydrogen generator unit until the input current from the hydrogen generator unit is equal to the target input current, in a case that the present input current from the hydrogen generator unit is less than the target input current; and
   decreasing the direct-current power consumption of the electrolyzer in the hydrogen generator unit until the input current from the hydrogen generator unit is equal to the target input current, in a case that the present input current from the hydrogen generator unit is greater than the target input current.

8. The frequency regulation control method for the power system according to any one of claims 1 to 7, wherein after the adjusting the input current from the hydrogen generator unit based on the target input current, the method further comprises:
   returning to the step of determining whether the present grid frequency of the power system is within the preset frequency deviation range.

9. The frequency regulation control method for the power system according to any one of claims 1 to 7, further comprising:
   returning to the step of determining whether the present grid frequency of the power system is within the preset frequency deviation range in response to determining that the present grid frequency is within the preset frequency deviation range, until it is determined that the present grid frequency is not within the preset frequency deviation range.

10. A power system, comprising: a renewable energy power generation unit, an energy storage unit and a controller; wherein the energy storage unit at least comprises a hydrogen generator unit; and

the controller is communicatively connected to the energy storage unit to perform the frequency regulation control method for the power system according to any one of claims 1 to 9 by sampling the present grid frequency of the power system in real time.

Start

It is determined whether
a present grid frequency of the power system is within a preset
frequency deviation range

S100

No

A change value of an input current from a hydrogen generator unit in the
power system is calculated based on the present grid frequency and a rated
grid frequency

S102

A target input current from the hydrogen generator unit is determined, based
on a relationship between the change value of the input current from the
hydrogen generator unit and a threshold of the change value of the input
current and a relationship between a changed input current and a threshold of
the changed input current

S104

An input current from the hydrogen generator unit is adjusted based on the
target input current to adjust a grid frequency of the power system to the
preset frequency deviation range

S106

End

**FIG. 1**

A grid frequency difference between the present grid frequency and the rated grid frequency is determined $\sim$ S200

The change value of the input current from the hydrogen generator unit is calculated based on the grid frequency difference and a current adjustment proportion function $\sim$ S202

**FIG. 2**

```
                          ┌─────────────┐
                          │    Start    │
                          └──────┬──────┘
                                 │
                                 ▼
              ╱─────────────────────────────────────╲
             ╱       It is determined whether         ╲        S100
            ╱ a present grid frequency of the power system is within a ╲
             ╲        preset frequency deviation range  ╱
              ╲─────────────────────────────────────╱
                                 │
                                No
                                 ▼
    ┌──────────────────────────────────────────────────────┐
    │ A change value of an input current from a hydrogen generator unit in the │   S102
    │ power system is calculated based on the present grid frequency and a │
    │                  rated grid frequency                  │
    └──────────────────────────────────────────────────────┘
                                 │
                                 ▼
    ┌──────────────────────────────────────────────────────┐
    │ A target input current from the hydrogen generator unit is determined, │
    │ based on a relationship between the change value of the input current │   S104
    │ from the hydrogen generator unit and a threshold of the change value of │
    │ the input current and a relationship between a changed input current and │
    │         a threshold of the changed input current         │
    └──────────────────────────────────────────────────────┘
                                 │
                                 ▼
    ┌──────────────────────────────────────────────────────┐
    │ An input current from the hydrogen generator unit is adjusted based on │   S106
    │ the target input current to adjust a grid frequency of the power system to │
    │            the preset frequency deviation range            │
    └──────────────────────────────────────────────────────┘
                                 │
                                 ▼
                          ┌─────────────┐
                          │     End     │
                          └─────────────┘
```

**FIG. 3**

Start

Yes

It is determined whether
a present grid frequency of the power system is within a
preset frequency deviation range

S100

No

A change value of an input current from a hydrogen generator unit in the
power system is calculated based on the present grid frequency and a
rated grid frequency

S102

A target input current from the hydrogen generator unit is determined,
based on a relationship between the change value of the input current
from the hydrogen generator unit and a threshold of the change value of
the input current and a relationship between a changed input current and
a threshold of the changed input current

S104

An input current from the hydrogen generator unit is adjusted based on
the target input current to adjust a grid frequency of the power system to
the preset frequency deviation range

S106

End

**FIG. 4**

An actual frequency of the power grid is monitored — S1

whether the actual frequency of the power grid is within the allowable frequency range is determined — S2

Yes

No

the difference between the actual frequency and the rated frequency is calculated — S3

The change value of the input current by the process for producing hydrogen by electrolyzing water is calculated based on the proportional process — S4

The new input current by the process for producing hydrogen by electrolyzing water is set based on the relationship between the change value and the threshold of the change value of the input current and the relationship between the changed value and the threshold of the changed value — S5

The direct-current power consumption of the electrolyzer is changed by changing the voltage, power, and hydrogen yield of the electrolyzer to change the system frequency — S6

**FIG. 5**

## INTERNATIONAL SEARCH REPORT

| International application No. |
| --- |
| **PCT/CN2023/070601** |

**A. CLASSIFICATION OF SUBJECT MATTER**

H02J 3/24(2006.01)i;H02J 15/00(2006.01)i

According to International Patent Classification (IPC) or to both national classification and IPC

**B. FIELDS SEARCHED**

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

VEN, CNTXT, CNABS, WOTXT, EPTXT, USTXT, CNKI, IEEE: 调频, 频率, 电网, 偏差, 制氢, 输入电流, 目标, 限值, 比例函数, frequency, modulation, electric, range, deviation, current, generation, hydrogen, value

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115224703 A (SUNGROW POWER SUPPLY (NANJING) CO., LTD.) 21 October 2022 (2022-10-21)<br>description, paragraphs [0004]-[0114], and figures 1-5 | 1-10 |
| A | CN 109524974 A (HUNAN UNIVERSITY) 26 March 2019 (2019-03-26)<br>description, paragraphs [0004]-[0081], and figures 1-7 | 1-10 |
| A | CN 112003297 A (SHENYANG VYCON NEW ENERGY TECHNOLOGY CO., LTD.) 27 November 2020 (2020-11-27)<br>entire document | 1-10 |
| A | CN 113644665 A (SUNSHINE NEW ENERGY DEVELOPMENT CO., LTD.) 12 November 2021 (2021-11-12)<br>entire document | 1-10 |
| A | JP 2019115249 A (HEPU TECHNOLOGY DEVELOPMENT BEIJING CO., LTD.) 11 July 2019 (2019-07-11)<br>entire document | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 March 2023** | **22 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

| International application No. |
| --- |
| **PCT/CN2023/070601** |

| Patent document cited in search report | | | Publication date (day/month/year) | Patent family member(s) | | | Publication date (day/month/year) |
| --- | --- | --- | --- | --- | --- | --- | --- |
| CN | 115224703 | A | 21 October 2022 | None | | | |
| CN | 109524974 | A | 26 March 2019 | CN | 109524974 | B | 22 September 2020 |
| CN | 112003297 | A | 27 November 2020 | None | | | |
| CN | 113644665 | A | 12 November 2021 | None | | | |
| JP | 2019115249 | A | 11 July 2019 | CN | 108599190 | A | 28 September 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210877108